# EUROPEAN PATENT SPECIFICATION

(11) **EP 3 378 609 B1**
(45) Date of publication and mention of the grant of the patent: **24.07.2019**
(21) Application number: 17192816.1
(22) Date of filing: 25.09.2017
(51) Int. Cl.: B25J 17/02, B25J 19/06

(54) **PASSIVE COMPLIANCE MECHANISM**
PASSIVER COMPLIANCE-MECHANISMUS
MÉCANISME DE CONFORMITÉ PASSIVE

(30) Priority: 23.03.2017 TW 106109706
(43) Date of publication of application: 26.09.2018
(73) Proprietor: Delta Electronics, Inc., Taoyuan City 33370 (TW)
(72) Inventor: Schweigler, Michael, 32063 Taoyuan City (TW); PENG, Chih-Cheng, 32063 Taoyuan City (TW); PAO, Chao-An, 32063 Taoyuan City (TW); YI, Tzu-Min, 32063 Taoyuan City (TW); CHU, Wei-Ying, 32063 Taoyuan City (TW)
(74) Representative: 2K Patentanwälte Blasberg Kewitz & Reichel

(56) References cited:
- CN-A- 105 599 004

## Description

### FIELD OF THE INVENTION

The present invention relates to a passive compliance mechanism, and more particularly to a passive compliance mechanism capable of adjusting the magnitude of the stiffness.

### BACKGROUND OF THE INVENTION

With increasing development of science and technology, robots have been widely used in various fields in order to enhance the production speed and reduce the labor cost. In some situations, the robot is equipped with a compliance mechanism, for example like in document CN 105 599 004. The use of the compliance mechanism can comply with the flexible operation for the assembly process and enhance the safety of the robot that is in direct contact with the user (e.g., the service robot). Due to the compliance mechanism, the robot has the compliant property. Generally, the compliance mechanisms are divided into two types, i.e., an active compliance mechanism and a passive compliance mechanism. By absorbing energy or generating a compliant action, the passive compliance mechanism achieves the compliance. Since the response rate is very fast, the passive compliance mechanism is widely applied to various kinds of robots.

Conventionally, the passive compliance mechanism uses the elastic force of a spring to achieve the compliance efficacy. Since the elasticity coefficient of the spring used in the conventional passive compliance mechanism is fixed, the stiffness of the conventional passive compliance mechanism is fixed and unable to be adjusted. If the conventional passive compliance mechanism is applied to a different working environment or a different robot, it is necessary to adjust the stiffness. In accordance with the conventional approach of adjusting the stiffness, the spring is replaced with a new one or the design of the passive compliance mechanism is changed. In other words, the applications of the conventional passive compliance mechanism are insufficient and the fabricating cost is high.

Therefore, there is a need of providing an improved passive compliance mechanism in order to overcome the above drawbacks.

### SUMMARY OF THE INVENTION

An object of the present invention provides a passive compliance mechanism capable of adjusting the magnitude of the stiffness in order to overcome the drawbacks of the conventional technologies.

In accordance with an aspect of the present invention, there is provided a passive compliance mechanism. The passive compliance mechanism includes a fixing member, a base and a stiffness adjustment assembly. The base is installed on the fixing member, and includes two notches and an elastic slice. The two notches are arranged side by side. The elastic slice is arranged between the two notches and protruded externally from the base in a direction toward an outer periphery of the fixing member. A first end of the elastic slice is connected with the base. A second end of the elastic slice is located near the outer periphery of the fixing member. The stiffness adjustment assembly is installed on the fixing member, and includes a linear guide, a sliding block and two stopping blocks. The linear guide is installed on the fixing member and aligned with the elastic slice. The sliding block is movably installed on the linear guide. The two stopping blocks are fixedly disposed on the sliding block and synchronously moved with the sliding block. The two stopping blocks are contacted with two opposite sides of the elastic slice to clamp the elastic slice. A stiffness of the base is adjustable according to a clamped position of the elastic slice.

In accordance with another aspect of the present invention, there is provided a passive compliance mechanism. The passive compliance mechanism includes a fixing member, a base, a first stiffness adjustment assembly and a second stiffness adjustment assembly. The base is installed on the fixing member, and includes a first notch, a second notch and an elastic slice. The elastic slice is installed on the base, accommodated within the first notch, and protruded externally from the base in a direction toward an outer periphery of the fixing member. A first end of the elastic slice is connected with the base. A second end of the elastic slice is located near the outer periphery of the fixing member. The first stiffness adjustment assembly is installed on the fixing member, and includes a first linear guide, a first sliding block and two first stopping blocks. The first linear guide is installed on the fixing member and aligned with the elastic slice. The first sliding block is movably installed on the first linear guide. The two first stopping blocks are fixedly disposed on the first sliding block and synchronously moved with the first sliding block. The two first stopping blocks are contacted with two opposite sides of the elastic slice to clamp the elastic slice. A stiffness of the base is adjustable according to a clamped position of the elastic slice. The stiffness switching module is installed on the fixing member, and includes a second linear guide, a second sliding block and a second stopping block. The second linear guide is installed on the fixing member. The second sliding block is movably installed on the first linear guide and selectively moved to a first position or a second position. The second stopping block is fixedly disposed on the second sliding block and synchronously moved with the second sliding block. When the second sliding block is moved to the first position, the second stopping block is moved to the second notch and engaged with the second notch, so that the base has the maximum stiffness. When the second sliding block is moved to the second position, the second stopping block is disengaged from the second notch.

The above contents of the present invention will become more readily apparent to those ordinarily skilled in the art after reviewing the following detailed description and accompanying drawings, in which:

### BRIEF DESCRIPTION OF THE DRAWINGS

FIG. 1 is a schematic perspective view illustrating a passive compliance mechanism according to a first embodiment of the present invention;
FIG. 2 is a schematic perspective view illustrating a variant example of the passive compliance mechanism of FIG. 1;
FIG. 3 is a schematic perspective view illustrating a passive compliance mechanism according to a second embodiment of the present invention;
FIG. 4 is a schematic top view illustrating the passive compliance mechanism of FIG. 3;
FIG. 5 is a schematic perspective view illustrating a variant example of the passive compliance mechanism of FIG. 3; and
FIG. 6 is a schematic top view illustrating another variant example of the passive compliance mechanism of FIG. 3.

### DETAILED DESCRIPTION OF THE PREFERRED EMBODIMENT

The present invention will now be described more specifically with reference to the following embodiments. It is to be noted that the following descriptions of preferred embodiments of this invention are presented herein for purpose of illustration and description only. It is not intended to be exhaustive or to be limited to the precise form disclosed.

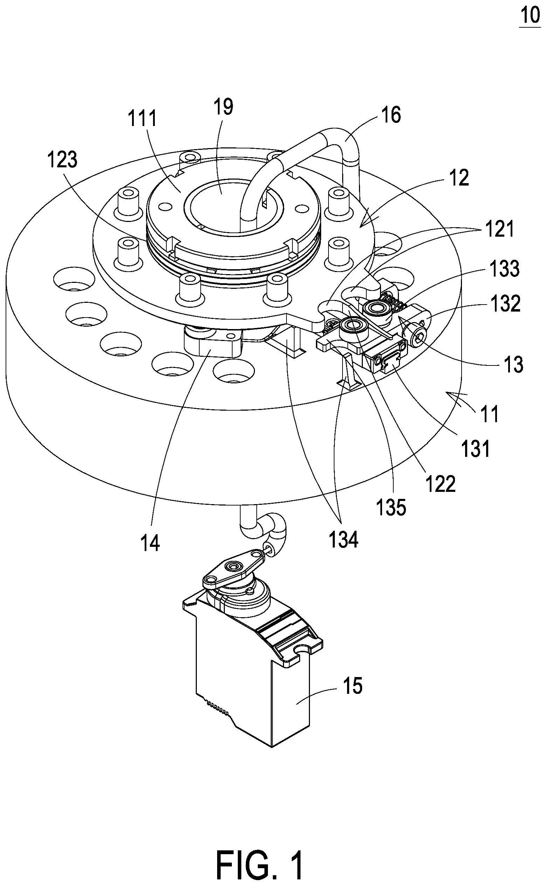

FIG. 1 is a schematic perspective view illustrating a passive compliance mechanism according to a first embodiment of the present invention. As shown in FIG. 1, the passive compliance mechanism 10 is applied to a service robot, a collaborative robot, an industrial robot or any other appropriate robot. The passive compliance mechanism 10 is installed in a joint of an arm or a leg of the robot. In an embodiment, the passive compliance mechanism 10 comprises a fixing member 11, a base 12 and a stiffness adjustment assembly 13.

The fixing member 11 is assembled with the joint of the robot. The base 12 is installed on the fixing member 11 through a bearing (not shown). The base 12 is made of a flexible (or elastic) material. When an external force is applied to the base 12, the base 12 is subjected to an elastic deformation according to the magnitude of the stiffness of the base 12. Consequently, the base 12 is moved relative to the fixing member 11. Under this circumstance, the base 12 provides the compliant function. In this embodiment, the base 12 comprises two notches 121 and an elastic slice 122. The two notches 121 are arranged side by side. Moreover, the two notches 121 are concavely formed in the direction from an outer periphery of the base 12 to the center of the base 12. The elastic slice 122 is arranged between the two notches 121. Moreover, the elastic slice 122 is protruded externally from the base 12 in the direction toward the outer periphery of the fixing member 11. A first end of the elastic slice 122 is connected with the base 12. A second end of the elastic slice 122 is located near the outer periphery of the fixing member 11. Preferably, the elastic slice 122 is integrally formed with the base 12.

The stiffness adjustment assembly 13 is installed on the fixing member 11. In an embodiment, the stiffness adjustment assembly 13 comprises a linear guide 131, a sliding block 132 and two stopping blocks 133. The linear guide 131 is installed on the fixing member 11. Moreover, the linear guide 131 is aligned with the elastic slice 122. The sliding block 132 is movably installed on the linear guide 131. The two stopping blocks 133 are fixedly disposed on the sliding block 132 and synchronously moved with the sliding block 132. Moreover, the two stopping blocks 133 are contacted with two opposite sides of the elastic slice 122. Consequently, the elastic slice 122 is clamped by the two stopping blocks 133. The stiffness of the base 12 is adjustable according to the position of the elastic slice 122 clamped by the two stopping blocks 133. The two notches 121, the elastic slice 122 and the stiffness adjustment assembly 13 are collaboratively defined as a first stiffness adjustment module. The first stiffness adjustment module can be used to adjust the magnitude of the stiffness of the base 12.

Preferably but not exclusively, the sizes and shapes of the two notches 121 match the sizes and shapes of the two stopping blocks 133. The two notches 121 are concavely formed in the direction from the outer periphery of the base 12 to the center of the base 12. Consequently, the two stopping blocks 133 can be engaged with the two notches 121. As mentioned above, the two stopping blocks 133 are moved with the sliding block 132. When the two stopping blocks 133 are moved to the two notches 121 and engaged with the two notches 121, the base 12 has the maximum stiffness. Meanwhile, even if an external force is applied to the base 12, the base 12 is not subjected to the elastic deformation because the two stopping blocks 133 are engaged with the two notches 121. Consequently, the base 12 is indirectly fixed on the fixing member 11. Since the base 12 is not subjected to the elastic deformation relative to the fixing member 11, the stiffness of the base 12 is similar to the stiffness of the fixing member 11. When the two stopping blocks 133 are detached from the two notches 121 and disengaged from the two notches 121, the two stopping blocks 133 are moved between the first end and the second end of the elastic slice 122. Consequently, the position of the elastic slice 122 clamped by the two stopping blocks 133 is adjustable. Moreover, the distance between the first end of the elastic slice 122 and the clamped position of the elastic slice 122 is an available length of the elastic slice 122. The magnitude of the stiffness of the base 12 is influenced by the available length of the elastic slice 122. That is, if the clamped position of the elastic slice 122 is changed, the magnitude of the stiffness of the base 12 is changed. In case that the clamped position of the elastic slice 122 is closer to the second end of the elastic slice 122, the stiffness of the base 12 is lower. Whereas, in case that the clamped position of the elastic slice 122 is closer to the first end of the elastic slice 122, the stiffness of the base 12 is higher.

From the above descriptions, the flexible (or elastic) base 12 of the passive compliance mechanism 10 is capable of absorbing the impact. Consequently, the passive compliance mechanism 10 and the robot with the passive compliance mechanism 10 achieve the compliance. Moreover, the stiffness of the base 12 can be adjusted through the stiffness adjustment assembly 13. Consequently, the compliance of the passive compliance mechanism 10 is correspondingly adjusted. The passive compliance mechanism 10 can be applied to many kinds of the robots without the need of replacing any component or changing the design. For example, if the stiffness of the base 12 is adjusted to the maximum value, the passive compliance mechanism 10 is suitably applied to the industrial robot that requires high stiffness. If the stiffness of the base 12 is adjusted to the lower value, the passive compliance mechanism 10 is suitably applied to the service robot that requires high compliance. Alternatively, the passive compliance mechanism 10 is suitably applied to the collaboratively robot that cooperates with the user. In other words, the passive compliance mechanism 10 of the present invention is user-friendly and cost-effective.

In some embodiments, the altitude of the first end of the elastic slice 122 is equal to the altitude of the second end of the elastic slice 122. For increasing the adjustable stiffness range of the base 12 according to the clamped position of the elastic slice 122, the altitude of the elastic slice 122 is gradually decreased from the first end to the second end of the elastic slice 122.

Please refer to FIG. 1 again. The passive compliance mechanism 10 further comprises a cable rope 16 and a motor 15. The cable rope 16 is connected between the motor 15 and the sliding block 132. When the cable rope 16 is driven by the motor 15, the sliding block 132 is towed by the cable rope 16. Consequently, the sliding block 132 is moved along the linear guide 131. It is noted that the way of driving the movement of the sliding block 132 along the linear guide 131 is not restricted. For example, in another embodiment, the movement of the sliding block 132 is driven according to electromagnetic induction.

The fixing member 11 further comprises a raised block 111. The base 12 further comprises an opening 123 corresponding to the raised block 111. After the raised block 111 is penetrated through the opening 123, the base 12 is sheathed around the raised block 111. Consequently, the base 12 is installed on the fixing member 11. The passive compliance mechanism 10 further comprises a hollow pipe 19. The hollow pipe 19 runs through the center of the fixing member 11 and the center of the raised block 111. A portion of the cable rope 16 or any other wire of the passive compliance mechanism 10 can be wired through the hollow pipe 19. Consequently, the operation of the passive compliance mechanism 10 is not adversely affected by the cable rope 16 or the wire.

Moreover, the stiffness adjustment assembly 13 further comprises two position-limiting structures 134. The two position-limiting structures 134 are separately disposed on the fixing member 11. One of the two position-limiting structures 134 is located near the center of the fixing member 11. The other of the two position-limiting structures 134 is located near the outer periphery of the fixing member 11. The range between the two position-limiting structures 134 is substantially a movable range of the sliding block 132. The length of the movable range is slightly larger than or equal to the displacement of the two stopping blocks 133 from the two notches 121 to the second end of the elastic slice 122. The sliding block 132 further comprises a protrusion structure 135. The protrusion structure 135 is protruded from a lateral surface of the sliding block 132. Moreover, the protrusion structure 135 is arranged between the two position-limiting structures 134. While the sliding block 132 is moved along the linear guide 131, the movable range of the protrusion structure 135 (or the sliding block 132) is limited by the two position-limiting structures 134. That is, when the two stopping blocks 133 are moved to the two notches 121 and engaged with the two notches 121, the sliding block 132 cannot be continuously moved toward the center of the fixing member 11. Similarly, when the two stopping blocks 133 are moved to the position corresponding to the second end of the elastic slice 122, the sliding block 132 cannot be continuously moved toward the outer periphery of the fixing member 11.

In an embodiment, the passive compliance mechanism 10 further comprises a sensor 14. The sensor 14 is aligned with the base 12 and installed on the fixing member 11. The sensor 14 is used for measuring the displacement of the base 12 relative to the fixing member 11 in response to the elastic deformation. After the magnitude of the stiffness of the base 12 is obtained and the displacement of the base 12 is measured by the sensor 14, the torque of the passive compliance mechanism 10 is calculated. Consequently, the passive compliance mechanism 10 is capable of sensing the torque. In another embodiment, the sensor 14 is used for measuring the torque angle of the passive compliance mechanism 10.

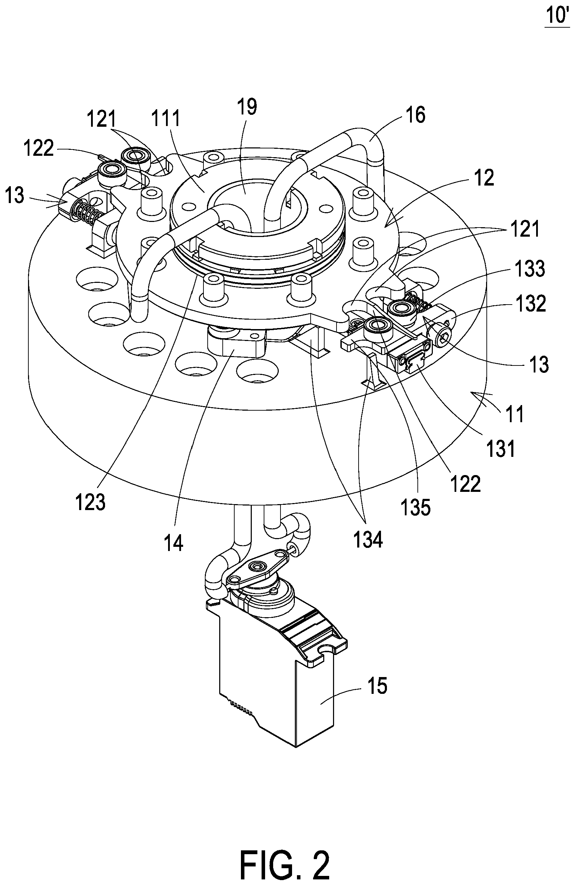

For increasing the precision of adjusting the stiffness, the passive compliance mechanism is modified. FIG. 2 is a schematic perspective view illustrating a variant example of the passive compliance mechanism of FIG. 1. In this embodiment, the passive compliance mechanism 10' further comprises a second stiffness adjustment module. The second stiffness adjustment module comprises two notches 121, an elastic slice 122 and a stiffness adjustment assembly 13. The components, relationships and functions of the second stiffness adjustment module are similar to those of the first stiffness adjustment module, and are not redundantly described herein. In an embodiment, the first stiffness adjustment module and the second stiffness adjustment module are located at two opposite sides of the fixing member 11. In another embodiment, the first stiffness adjustment module and the second stiffness adjustment module are arranged near each other. The first stiffness adjustment module and the second stiffness adjustment module cooperate with each other to adjust the stiffness of the base. In some other embodiments, the passive compliance mechanism comprises at least three stiffness adjustment modules according to the practical requirements.

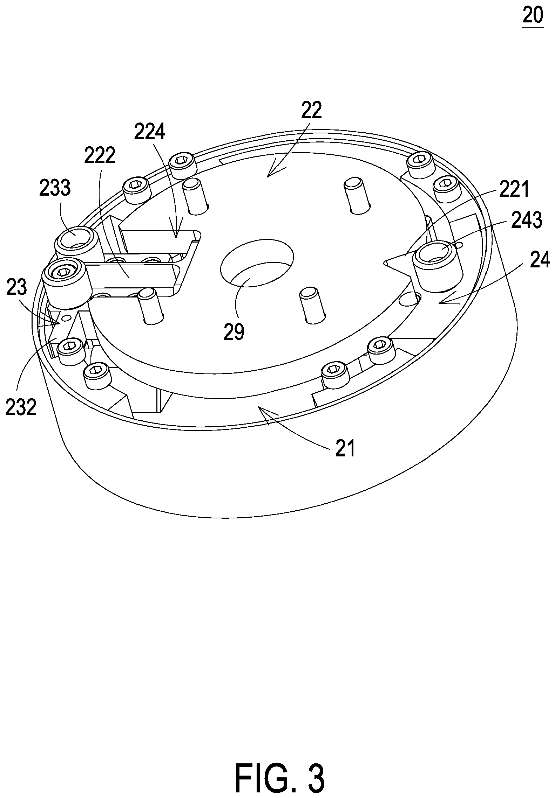

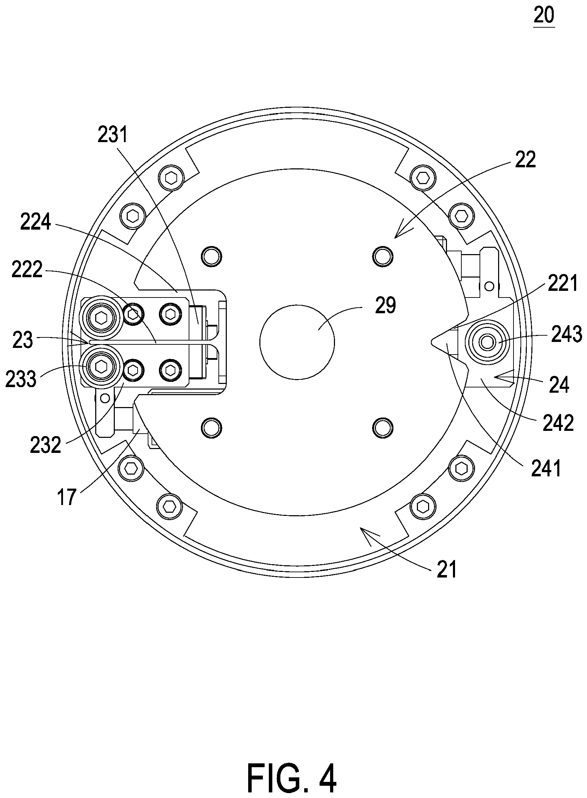

FIG. 3 is a schematic perspective view illustrating a passive compliance mechanism according to a second embodiment of the present invention. FIG. 4 is a schematic top view illustrating the passive compliance mechanism of FIG. 3. The passive compliance mechanism 20 is applied to a service robot, a collaborative robot, an industrial robot or any other appropriate robot. The passive compliance mechanism 20 is installed in a joint of an arm or a leg of the robot. In an embodiment, the passive compliance mechanism 20 comprises a fixing member 21, a base 22, a first stiffness adjustment assembly 23 and a stiffness switching module 24.

The fixing member 21 is assembled with the joint of the robot. The base 22 is installed on the fixing member 21 through a bearing (not shown). The base 22 is made of a flexible (or elastic) material. When an external force is applied to the base 22, the base 22 is subjected to an elastic deformation according to the magnitude of the stiffness of the base 22. Consequently, the base 22 is moved relative to the fixing member 21. Under this circumstance, the base 22 provides the compliant function. In this embodiment, the base 22 comprises a first notch 224, a second notch 221 and an elastic slice 222. Preferably but not exclusively, the second notch 221 is a fan-shaped notch. Moreover, the second notch 221 is concavely formed in the direction from an outer periphery of the base 22 to the center of the base 22. The elastic slice 222 is assembled with the base 22 and disposed within the first notch 224. Moreover, the elastic slice 222 is protruded externally from the base 22 in the direction toward the outer periphery of the fixing member 21. A first end of the elastic slice 222 is connected with the base 22. A second end of the elastic slice 222 is located near the outer periphery of the fixing member 21. In an embodiment, the elastic slice 222 is assembled with the base 22. Alternatively, the elastic slice 222 is integrally formed with the base 22. Moreover, the first notch 224 is divided into two receiving spaces through the elastic slice 222. Moreover, the first notch 224 and the second notch 221 are located at two opposite sides of the base 22.

The first stiffness adjustment assembly 23 is installed on the fixing member 21. In an embodiment, the first stiffness adjustment assembly 23 comprises a first linear guide 231, a first sliding block 232 and two first stopping blocks 233. The first linear guide 231 is installed on the fixing member 21. Moreover, the first linear guide 231 is aligned with the elastic slice 222. The first sliding block 232 is movably installed on the first linear guide 231. The two first stopping blocks 233 are fixedly disposed on the first sliding block 232 and synchronously moved with the first sliding block 232. Moreover, the two first stopping blocks 233 are contacted with two opposite sides of the elastic slice 222. Consequently, the elastic slice 222 is clamped by the two first stopping blocks 233. The stiffness of the base 22 is adjustable according to the position of the elastic slice 222 clamped by the two first stopping blocks 233. Moreover, the distance between the first end of the elastic slice 222 and the clamped position of the elastic slice 222 is an available length of the elastic slice 222. The magnitude of the stiffness of the base 22 is influenced by the available length of the elastic slice 222. That is, if the clamped position of the elastic slice 222 is changed, the magnitude of the stiffness of the base 22 is changed. In case that the clamped position of the elastic slice 222 is closer to the second end of the elastic slice 222, the stiffness of the base 22 is lower. Whereas, in case that the clamped position of the elastic slice 222 is closer to the first end of the elastic slice 222, the stiffness of the base 22 is higher. When the two first stopping blocks 233 are moved to the first end of the elastic slice 222, the two first stopping blocks 233 are accommodated within the receiving spaces of the first notch 224, respectively. Moreover, the first notch 224, the elastic slice 222 and the first stiffness adjustment assembly 23 are collaboratively defined as a first stiffness adjustment module. The first stiffness adjustment module can be used to adjust the magnitude of the stiffness of the base 22.

The stiffness switching module 24 is installed on the fixing member 21 and aligned with the second notch 221. In an embodiment, the stiffness switching module 24 comprises a second linear guide 241, a second sliding block 242 and a second stopping block 243. The second linear guide 241 is installed on the fixing member 21 and aligned with the second notch 221. The second sliding block 242 is movably installed on the second linear guide 241. Moreover, the second sliding block 242 can be moved to a first position or a second position. The second stopping block 243 is fixedly disposed on the second sliding block 242 and synchronously moved with the second sliding block 242.

When the second sliding block 242 is moved to the first position, the second stopping block 243 is moved to the second notch 221 and engaged with the second notch 221, and thus the base 22 has the maximum stiffness. Meanwhile, even if an external force is applied to the base 22, the base 22 is not subjected to the elastic deformation because the second stopping block 243 is engaged with the second notch 221. Consequently, the base 22 is indirectly fixed on the fixing member 21. Since the base 22 is not subjected to the elastic deformation relative to the fixing member 21, the stiffness of the base 22 is similar to the stiffness of the fixing member 21. When the second sliding block 242 is moved to the second position, the second stopping block 243 is completely disengaged from the second notch 221.

For acquiring the maximum stiffness of the base 22, the second sliding block 242 is moved to the first position. Consequently, the second stopping block 243 is moved to the second notch 221 and engaged with the second notch 221. For dynamically adjusting stiffness of the base 22, the second sliding block 242 is moved to the second position. When the clamped position of the elastic slice 222 by the first stopping blocks 233 is changed, the magnitude of the stiffness of the base 22 is adjusted.

In an embodiment, the passive compliance mechanism 20 further comprises a magnetic driving module 17. The magnetic driving module 17 is installed on the fixing member 21 and located near the first sliding block 232. The magnetic driving module 17 drives the movement of the first sliding block 232 along the first linear guide 231 according to electromagnetic induction. It is noted that the way of driving the movement of the first sliding block 232 along the first linear guide 231 is not restricted. For example, as described in the first embodiment, the use of the motor to drive to the cable rope to tow the sliding block along the linear guide is also feasible. The above driving method can be used to drive the stiffness switching module 24 in order to drive movement of the second sliding block 242 along the second linear guide 241. The passive compliance mechanism 20 further comprises a hollow pipe 29. The hollow pipe 29 runs the fixing member 21 and the base 22. A portion of the cable rope or any other wire of the passive compliance mechanism 20 can be wired through the hollow pipe 29. Consequently, the operation of the passive compliance mechanism 20 is not adversely affected by the cable rope or the wire.

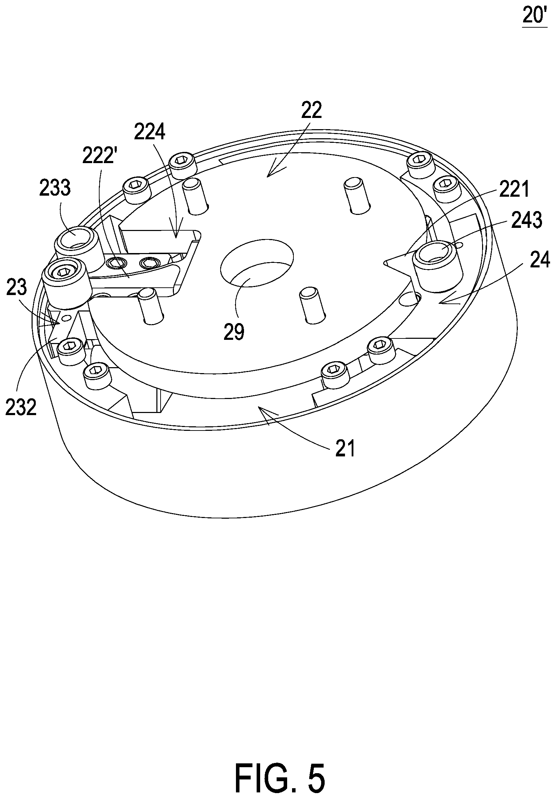

In the embodiment of FIG. 4, the altitude of the first end of the elastic slice 222 is equal to the altitude of the second end of the elastic slice 222. FIG. 5 is a schematic perspective view illustrating a variant example of the passive compliance mechanism of FIG. 3. For increasing the adjustable stiffness range of the base 22 according to the clamped position of the elastic slice 222', the altitude of the elastic slice 222' is gradually decreased from the first end to the second end of the elastic slice 222'. Consequently, the efficacy of adjusting the stiffness by the passive compliance mechanism 20' is enhanced.

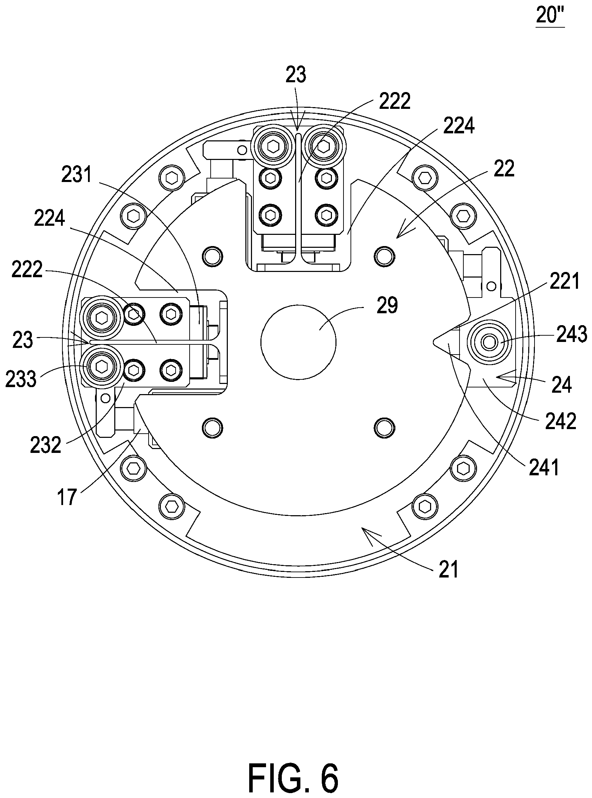

For increasing the precision of adjusting the stiffness, the passive compliance mechanism is modified. FIG. 6 is a schematic top view illustrating another variant example of the passive compliance mechanism of FIG. 3. In this embodiment, the passive compliance mechanism 20' further comprises a second stiffness adjustment module. The second stiffness adjustment module comprises a first notch 224, an elastic slice 222 and a first stiffness adjustment assembly 23. The components, relationships and functions of the second stiffness adjustment module are similar to those of the first stiffness adjustment module, and are not redundantly described herein. In an embodiment, the first stiffness adjustment module and the second stiffness adjustment module are located at two opposite sides of the fixing member 21. In another embodiment, the first stiffness adjustment module and the second stiffness adjustment module are arranged near each other. The first stiffness adjustment module and the second stiffness adjustment module cooperate with each other to adjust the stiffness of the base. In some other embodiments, the passive compliance mechanism comprises at least three stiffness adjustment modules according to the practical requirements.

From the above descriptions, the present invention provides the passive compliance mechanism. The stiffness adjustment assembly is used to adjust the stiffness of the base. The passive compliance mechanism can be applied to many kinds of the robots without the need of replacing any component or changing the design. For example, if the stiffness of the base is adjusted to the maximum value, the passive compliance mechanism is suitably applied to the industrial robot that requires high stiffness. If the stiffness of the base is adjusted to the lower value, the passive compliance mechanism is suitably applied to the service robot that requires high compliance. Alternatively, the passive compliance mechanism is suitably applied to the collaboratively robot that cooperates with the user. In other words, the passive compliance mechanism of the present invention is user-friendly and cost-effective. For increasing the precision of adjusting the stiffness, the passive compliance mechanism comprises plural stiffness adjustment modules. A portion of the cable rope or any other wire of the passive compliance mechanism can be wired through the hollow pipe. Consequently, the operation of the passive compliance mechanism is not adversely affected by the cable rope or the wire. Moreover, the sensor is used for measuring the displacement or the distortion angle of the base relative to the fixing member in response to the elastic deformation. According to the stiffness of the base and the displacement or the distortion angle of the base, the torque of the passive compliance mechanism is calculated.

## Claims

1. A passive compliance mechanism (10, 10'), comprising:
a fixing member (11);
a base (12) installed on the fixing member (11), and comprising two notches (121) and an elastic slice (122), wherein the two notches (121) are arranged side by side, the elastic slice (122) is arranged between the two notches (121) and protruded externally from the base (12) in a direction toward an outer periphery of the fixing member (11), a first end of the elastic slice (122) is connected with the base (12), and a second end of the elastic slice (122) is located near the outer periphery of the fixing member (11); and
a stiffness adjustment assembly (13) installed on the fixing member (11), and comprising:
a linear guide (131) installed on the fixing member (11) and aligned with the elastic slice (122);
a sliding block (132) movably installed on the linear guide (131); and
two stopping blocks (133) fixedly disposed on the sliding block (132) and synchronously moved with the sliding block (132), wherein the two stopping blocks (133) are contacted with two opposite sides of the elastic slice (122) to clamp the elastic slice (122), and a stiffness of the base (12) is adjustable according to a clamped position of the elastic slice (122).

2. The passive compliance mechanism (10, 10') according to claim 1, wherein when the clamped position of the elastic slice (122) clamped by the two stopping blocks (133) is closer to the first end of the elastic slice (122), the stiffness of the base (12) is higher, wherein when the clamped position of the elastic slice (122) clamped by the two stopping blocks (133) is closer to the second end of the elastic slice (122), the stiffness of the base (12) is lower, wherein when the two stopping blocks (133) are moved by the sliding block (132) to the two notches (121) and engaged with the two notches (121), the stiffness of the base (12) has the maximum value.

3. The passive compliance mechanism (10, 10') according to claim 1 or 2, wherein the elastic slice (122) is integrally formed with the base (12), wherein an altitude of the elastic slice (122) is gradually decreased from the first end to the second end of the elastic slice (122).

4. The passive compliance mechanism (10, 10') according to one of the preceding claims, wherein the passive compliance mechanism (10, 10') further comprises a cable rope (16), and the cable rope (16) is connected between a motor (15) and the sliding block (132), wherein when the cable rope (16) is driven by the motor (15), the sliding block (132) is towed by the cable rope (16), so that the sliding block (132) is moved along the linear guide (131).

5. The passive compliance mechanism (10, 10') according to one of the preceding claims, wherein the fixing member (11) further comprises a raised block (111), and the base (12) further comprises an opening (123), wherein the raised block (111) is penetrated through the opening (123), so that the base (12) is installed on the fixing member (11), wherein the passive compliance mechanism (10, 10') further comprises a hollow pipe (19), the hollow pipe (19) runs through a center of the fixing member (11) and a center of the raised block (111).

6. The passive compliance mechanism (10, 10') according to one of the preceding claims, further comprising a sensor (14) corresponding to the base (12), wherein the sensor (14) is installed on the fixing member (11) to measure a displacement or a distortion angle of the base (12) relative to the fixing member (11) in response to an elastic deformation of the base (12).

7. The passive compliance mechanism (10, 10') according to one of the preceding claims, wherein the two notches (121), the elastic slice (122) and the stiffness adjustment assembly (13) are collaboratively defined as a first stiffness adjustment module, and the passive compliance mechanism (10, 10') further comprises a second stiffness adjustment module with the same structure as the first stiffness adjustment module, wherein the first stiffness adjustment module and the second stiffness adjustment module are located at two opposite sides of the fixing member (11), and the first stiffness adjustment module and the second stiffness adjustment module cooperate with each other to adjust the stiffness of the base (12).

8. The passive compliance mechanism (10, 10') according to one of the preceding claims, wherein the stiffness adjustment assembly (13) further comprises two position-limiting structures (134), and the two position-limiting structures (134) are separately disposed on the fixing member (11), wherein one of the two position-limiting structures (134) is located near a center of the fixing member (11), and the other of the two position-limiting structures (134) is located near the outer periphery of the fixing member (11), so that a movable range of the sliding block (132) is determined by the two position-limiting structures (134).

9. The passive compliance mechanism (10, 10') according to claim 8, wherein the sliding block (132) further comprises a protrusion structure (135), and the protrusion structure (135) is protruded from a lateral surface of the sliding block (132) and arranged between the two position-limiting structures (134), wherein while the sliding block (132) is moved along the linear guide (131), the movable range of the sliding block (132) is limited by the two position-limiting structures (134) through the protrusion structure (135), wherein a length of the movable range is slightly larger than or equal to a displacement of the two stopping blocks (133) from the two notches (121) to the second end of the elastic slice (122).

10. A passive compliance mechanism (20, 20', 20"), comprising:
a fixing member (21);
a base (22) installed on the fixing member (21), and comprising a first notch (224), a second notch (221) and an elastic slice (222), wherein the elastic slice (222) is installed on the base (22), accommodated within the first notch (224), and protruded externally from the base (22) in a direction toward an outer periphery of the fixing member (21), a first end of the elastic slice (222) is connected with the base (22), and a second end of the elastic slice (222) is located near the outer periphery of the fixing member (21);
a first stiffness adjustment assembly (23) installed on the fixing member (21), and comprising:
a first linear guide (231) installed on the fixing member (21) and aligned with the elastic slice (222);
a first sliding block (232) movably installed on the first linear guide (231); and
two first stopping blocks (233) fixedly disposed on the first sliding block (232) and synchronously moved with the first sliding block (232), wherein the two first stopping blocks (233) are contacted with two opposite sides of the elastic slice (222) to clamp the elastic slice (222), and a stiffness of the base (22) is adjustable according to a clamped position of the elastic slice (222); and
a stiffness switching module (24) installed on the fixing member (21), and comprising:
a second linear guide (241) installed on the fixing member (21);
a second sliding block (242) movably installed on the first linear guide (241) and selectively moved to a first position or a second position; and
a second stopping block (243) fixedly disposed on the second sliding block (242) and synchronously moved with the second sliding block (242), wherein when the second sliding block (242) is moved to the first position, the second stopping block (243) is moved to the second notch (221) and engaged with the second notch (221), so that the base (22) has the maximum stiffness, wherein when the second sliding block (242) is moved to the second position, the second stopping block (243) is disengaged from the second notch (221).

11. The passive compliance mechanism (20, 20', 20") according to claim 10, wherein when the second sliding block (242) is moved to the second position and the clamped position of the elastic slice (222) clamped by the two first stopping blocks (233) is closer to the first end of the elastic slice (222), the stiffness of the base (22) is higher, wherein when the second sliding block (242) is moved to the second position and the clamped position of the elastic slice (222) clamped by the two first stopping blocks (233) is closer to the second end of the elastic slice (222), the stiffness of the base (22) is lower.

12. The passive compliance mechanism (20, 20', 20") according to claim 10 or 11, wherein the elastic slice (222) is assembled with the base (22), wherein an altitude of the elastic slice (222') is gradually decreased from the first end to the second end of the elastic slice (222').

13. The passive compliance mechanism (20, 20', 20") according to one of claims 10-12, further comprising a magnetic driving module (17), wherein the magnetic driving module (17) is installed on the fixing member (21) and located near the first sliding block (232), and the magnetic driving module (17) drives a movement of the first sliding block (232) along the first linear guide (231) according to electromagnetic induction.

14. The passive compliance mechanism (20, 20', 20") according to one of claims 10-13, further comprising a hollow pipe (29), wherein the hollow pipe (29) runs through the fixing member (21) and the base (22).

15. The passive compliance mechanism (20, 20', 20") according to one of claims 10-14, wherein the first notch (224), the elastic slice (222) and the first stiffness adjustment assembly (23) are collaboratively defined as a first stiffness adjustment module, and the passive compliance mechanism (20, 20', 20") further comprises a second stiffness adjustment module with the same structure as the first stiffness adjustment module, wherein the first stiffness adjustment module and the second stiffness adjustment module are arranged near each other or located at two opposite sides of the fixing member (21), and the first stiffness adjustment module and the second stiffness adjustment module cooperate with each other to adjust the stiffness of the base (22).

## Patentansprüche

1. Passiver Compliance-Mechanismus (10, 10'), umfassend:
ein Befestigungselement (11);
eine Basis (12), die auf dem Befestigungselement (11) installiert ist und zwei Kerben (121) und eine elastische Scheibe (122) umfasst, wobei die beiden Kerben (121) nebeneinander angeordnet sind, die elastische Scheibe (122) zwischen den beiden Kerben (121) angeordnet ist und außen von der Basis (12) in einer Richtung zu einem Außenumfang des Befestigungselements (11) vorsteht, wobei ein erstes Ende der elastischen Scheibe (122) mit der Basis (12) verbunden ist, und ein zweites Ende der elastischen Scheibe (122) nahe dem Außenumfang des Befestigungselements (11) angeordnet ist; und
eine Steifigkeits-Einstellungsanordnung (13), die auf dem Befestigungselement (11) installiert ist und umfasst:
eine Linearführung (131), die auf dem Befestigungselement (11) installiert und mit der elastischen Scheibe (122) ausgerichtet ist;
einen Gleitblock (132), der beweglich auf der Linearführung (131) montiert ist; und
zwei Anschlagblöcke (133), die fest auf dem Gleitblock (132) angeordnet und synchron mit dem Gleitblock (132) bewegbar sind, wobei die beiden Anschlagblöcke (133) mit zwei gegenüberliegenden Seiten der elastischen Scheibe (122) zum Klemmen der elastischen Scheibe (122) kontaktierbar sind und eine Steifigkeit der Basis (12) gemäß einer Klemmposition der elastischen Scheibe (122) einstellbar ist.

2. Passiver Compliance-Mechanismus (10, 10') nach Anspruch 1, wobei, wenn die Klemmposition der durch die beiden Anschlagblöcke (133) eingespannten elastischen Scheibe (122) näher an dem ersten Ende der elastischen Scheibe (122) liegt, die Steifigkeit der Basis (12) höher ist, wobei, wenn die eingespannte Position der elastischen Scheibe (122), die durch die beiden Anschlagblöcke (133) eingespannt ist, näher an dem zweiten Ende der elastischen Scheibe (122) liegt, die Steifigkeit der Basis (12) geringer ist, wobei, wenn die beiden Anschlagblöcke (133) durch den Gleitblock (132) zu den beiden Kerben (121) bewegt und mit den beiden Kerben (121) in Eingriff gebracht werden, die Steifigkeit der Basis (12) den Maximalwert aufweist.

3. Passiver Compliance-Mechanismus (10, 10') nach Anspruch 1 oder 2, wobei die elastische Scheibe (122) integral mit der Basis (12) ausgebildet ist, wobei eine Höhe der elastischen Scheibe (122) sich allmählich von dem ersten Ende bis zu dem zweiten Ende der elastischen Scheibe (122) verringert.

4. Passiver Compliance-Mechanismus (10, 10') nach einem der vorhergehenden Ansprüche, wobei der passive Compliance-Mechanismus (10, 10') ferner ein Kabelseil (16) umfasst und das Kabelseil (16) zwischen einem Motor (15) und dem Gleitblock (132) verbunden ist, wobei, wenn das Kabelseil (16) durch den Motor (15) angetrieben wird, der Gleitblock (132) durch das Kabelseil (16) gezogen wird, so dass der Gleitblock (132) sich entlang der Linearführung (131) bewegt.

5. Passiver Compliance-Mechanismus (10, 10') nach einem der vorhergehenden Ansprüche, wobei das Befestigungselement (11) ferner einen erhöhten Block (111) umfasst, und die Basis (12) ferner eine Öffnung (123) umfasst, wobei der erhöhte Block (111) durch die Öffnung (123) hindurchtritt, so dass die Basis (12) auf dem Befestigungselement (11) installiert ist, wobei der passive Compliance-Mechanismus (10, 10') weiterhin ein Hohlrohr (19) umfasst, wobei das Hohlrohr (19) durch eine Mitte des Befestigungselements (11) und eine Mitte des erhöhten Blocks (111) verläuft.

6. Passiver Compliance-Mechanismus (10, 10') nach einem der vorhergehenden Ansprüche, ferner umfassend einen Sensor (14) passend zu der Basis (12), wobei der Sensor (14) auf dem Befestigungselement (11) installiert ist, um eine Verschiebung oder einen Verzugswinkel der Basis (12) gegenüber dem Befestigungselement (11) als Reaktion auf eine elastische Verformung der Basis (12) zu messen.

7. Passiver Compliance-Mechanismus (10, 10') nach einem der vorhergehenden Ansprüche, wobei die beiden Kerben (121), die elastische Scheibe (122) und die Steifigkeits-Einstellungsanordnung (13) gemeinsam als ein erstes Steifigkeits-Einstellungsmodul definiert sind, und der passive Compliance-Mechanismus (10, 10') ferner ein zweites Steifigkeits-Einstellungsmodul mit der gleichen Struktur wie das erste Steifigkeits-Einstellungsmodul umfasst, wobei das erste Steifigkeits-Einstellungsmodul und das zweite Steifigkeits-Einstellungsmodul an zwei gegenüberliegenden Seiten des Befestigungselements (11) angeordnet sind, und das erste Steifigkeits-Einstellungsmodul und das zweite Steifigkeits-Einstellungsmodul miteinander zusammenarbeiten, um die Steifigkeit der Basis (12) einzustellen.

8. Passiver Compliance-Mechanismus (10, 10') nach einem der vorhergehenden Ansprüche, wobei die Steifigkeits-Einstellungsanordnung (13) ferner zwei positionsbegrenzende Strukturen (134) umfasst, und die beiden positionsbegrenzenden Strukturen (134) separat auf dem Befestigungselement (11) angeordnet sind, wobei eine der beiden positionsbegrenzenden Strukturen (134) in der Nähe einer Mitte des Befestigungselements (11) angeordnet ist, und die andere der beiden positionsbegrenzenden Strukturen (134) in der Nähe des äußeren Umfangs des Befestigungselements (11) angeordnet ist, so dass ein beweglicher Bereich des Gleitblocks (132) sich durch die beiden positionsbegrenzenden Strukturen (134) bestimmt.

9. Passiver Compliance-Mechanismus (10, 10') nach Anspruch 8, wobei der Gleitblock (132) ferner eine Vorstehstruktur (135) umfasst, und die Vorstehstruktur (135) aus einer Seitenfläche des Gleitblocks (132) herausragt und zwischen den beiden positionsbegrenzenden Strukturen (134) angeordnet ist, wobei der Gleitblock (132) während der Bewegung sich entlang der Linearführung (131) bewegt, wobei der bewegliche Bereich des Gleitblocks (132) durch die beiden positionsbegrenzenden Strukturen (134) durch die Vorstehstruktur (135) begrenzt ist, wobei eine Länge des beweglichen Bereichs geringfügig größer oder gleich einer Verschiebung der beiden Anschlagblöcke (133) von den beiden Kerben (121) zu dem zweiten Ende der elastischen Scheibe (122) ist.

10. Passiver Compliance-Mechanismus (20, 20', 20', 20"), umfassend:
ein Befestigungselement (21);
eine Basis (22), die auf dem Befestigungselement (21) installiert ist und eine erste Kerbe (224), eine zweite Kerbe (221) und eine elastische Scheibe (222) umfasst, wobei die elastische Scheibe (222) auf der Basis (22) installiert ist, die innerhalb der ersten Kerbe (224) untergebracht ist, und nach außen von der Basis (22) in Richtung eines Außenumfangs des Befestigungselements (21) vorsteht, wobei ein erstes Ende der elastischen Scheibe (222) mit der Basis (22) verbunden ist und ein zweites Ende der elastischen Scheibe (222) nahe dem Außenumfang des Befestigungselements (21) angeordnet ist;
eine erste Steifigkeits-Einstellungsanordnung (23), die auf dem Befestigungselement (21) installiert ist und umfasst:
eine erste Linearführung (231), die auf dem Befestigungselement (21) installiert und mit der elastischen Scheibe (222) ausgerichtet ist;
einen ersten Gleitblock (232), der beweglich auf der ersten Linearführung (231) montiert ist; und
zwei erste Anschlagblöcke (233), die fest auf dem ersten Gleitblock (232) angeordnet und synchron mit dem ersten Gleitblock (232) bewegbar sind, wobei die beiden ersten Anschlagblöcke (233) mit zwei gegenüberliegenden Seiten der elastischen Scheibe (222) zum Klemmen der elastischen Scheibe (222) kontaktierbar sind und eine Steifigkeit der Basis (22) gemäß einer Klemmposition der elastischen Scheibe (222) einstellbar ist; und
ein Steifigkeits-Einstellungsmodul (24), das auf dem Befestigungselement (21) installiert ist und umfasst:
eine zweite Linearführung (241), die auf dem Befestigungselement (21) montiert ist;
einen zweiten Gleitblock (242), der beweglich auf der ersten Linearführung (241) installiert und selektiv in eine erste Position oder eine zweite Position bewegbar ist; und
einen zweiten Anschlagblock (243), der fest auf dem zweiten Gleitblock (242) angeordnet und synchron mit dem zweiten Gleitblock (242) bewegbar ist, wobei, wenn der zweite Gleitblock (242) sich in die erste Position bewegt, der zweite Anschlagblock (243) sich in die zweite Kerbe (221) bewegt und sich mit der zweiten Kerbe (221) in Eingriff bringt, so dass die Basis (22) die maximale Steifigkeit aufweist, wobei, wenn der zweite Gleitblock (242) sich in die zweite Position bewegt, der zweite Anschlagblock (243) sich von der zweiten Kerbe (221) löst.

11. Passiver Compliance-Mechanismus (20, 20', 20"') nach Anspruch 10, wobei, wenn der zweite Gleitblock (242) sich in die zweite Position bewegt und die eingespannte Position der elastischen Scheibe (222), die durch die beiden ersten Anschlagsblöcke (233) eingespannt wird, näher an dem ersten Ende der elastischen Scheibe (222) liegt, die Steifigkeit der Basis (22) höher ist, wobei, wenn der zweite Gleitblock (242) sich in die zweite Position bewegt und die eingespannte Position der elastischen Scheibe (222), die von den beiden ersten Anschlagblöcken (233) eingespannt wird, näher an dem zweiten Ende der elastischen Scheibe (222) liegt, die Steifigkeit der Basis (22) geringer ist.

12. Passiver Compliance-Mechanismus (20, 20', 20"') nach Anspruch 10 oder 11, wobei die elastische Scheibe (222) mit der Basis (22) verbunden ist, wobei eine Höhe der elastischen Scheibe (222') von dem ersten Ende bis zu dem zweiten Ende der elastischen Scheibe (222') sich allmählich verringert.

13. Passiver Compliance-Mechanismus (20, 20', 20"') nach einem der Ansprüche 10-12, ferner umfassend ein magnetisches Antriebsmodul (17), wobei das magnetische Antriebsmodul (17) auf dem Befestigungselement (21) installiert und in der Nähe des ersten Gleitblocks (232) angeordnet ist, und das magnetische Antriebsmodul (17) eine Bewegung des ersten Gleitblocks (232) entlang der ersten Linearführung (231) gemäß elektromagnetischer Induktion steuert.

14. Passiver Compliance-Mechanismus (20, 20', 20"') nach einem der Ansprüche 10-13, ferner umfassend ein Hohlrohr (29), wobei das Hohlrohr (29) durch das Befestigungselement (21) und die Basis (22) verläuft.

15. Passiver Compliance-Mechanismus (20, 20', 20"') nach einem der Ansprüche 10-14, wobei die erste Kerbe (224), die elastische Scheibe (222) und die erste Steifigkeits-Einstellungsanordnung (23) gemeinsam als ein erstes Steifigkeits-Einstellungsmodul definiert sind, und der passive Compliance-Mechanismus (20, 20', 20"') ferner ein zweites Steifigkeits-Einstellungsmodul mit der gleichen Struktur wie das erste Steifigkeits-Einstellungsmodul umfasst, wobei das erste Steifigkeits-Einstellungsmodul und das zweite Steifigkeits-Einstellungsmodul nahe beieinander oder an zwei gegenüberliegenden Seiten des Befestigungselements (21) angeordnet sind, und das erste Steifigkeits-Einstellungsmodul und das zweite Steifigkeits-Einstellungsmodul miteinander zusammenarbeiten, um die Steifigkeit der Basis (22) einzustellen.

## Revendications

1. Un mécanisme de conformité passif (10, 10'), comprenant:
un élément de fixation (11);
une base (12) installée sur l'élément de fixation (11), et comprenant deux encoches (121) et une tranche élastique (122), dans laquelle les deux encoches (121) sont disposées côte à côte, la tranche élastique (122) étant agencée entre les deux encoches (121) et faisant saillie extérieurement à partir de la base (12) dans une direction allant vers la périphérie externe de l'élément de fixation (11), une première extrémité de la tranche élastique (122) étant reliée à la base (12), et une seconde extrémité de la tranche élastique (122) étant située près de la périphérie externe de l'élément de fixation (11); et
un ensemble de réglage de la rigidité (13) installé sur l'élément de fixation (11), et comprenant:
un guide linéaire (131) installé sur l'élément de fixation (11) et aligné avec la tranche élastique (122);
un bloc coulissant (132) installé de manière mobile sur le guide linéaire (131); et
deux blocs d'arrêt (133) disposés de manière fixe sur le bloc coulissant (132) et déplacés de manière synchrone avec le bloc coulissant (132), dans lequel les deux blocs d'arrêt (133) sont en contact avec deux côtés opposés de la tranche élastique (122) pour serrer la tranche élastique (122), et une raideur de la base (12) est réglable en fonction d'une position de serrage de la tranche élastique (122).

2. Le mécanisme de conformité passif (10, 10') selon la revendication 1, dans lequel, lorsque la position de serrage de la tranche élastique (122) serrée par les deux blocs d'arrêt (133) est plus proche de la première extrémité de la tranche élastique (122), la rigidité de la base (12) est plus grande, dans lequel lorsque la position serrée de la tranche élastique (122) serrée par les deux blocs d'arrêt (133) est plus proche de la seconde extrémité de la tranche élastique (122), la rigidité de la la base (12) est inférieure, dans laquelle, lorsque les deux blocs d'arrêt (133) sont déplacés vers les deux encoches (121) par le bloc coulissant (132) et en prise avec les deux encoches (121), la rigidité de la base (12) présente sa valeur maximale.

3. Le mécanisme de conformité passif (10, 10') selon la revendication 1 ou 2, dans lequel la tranche élastique (122) est intégralement formée avec la base (12), dans lequel une altitude de la tranche élastique (122) est progressivement réduite à partir de la première extrémité à la deuxième extrémité de la tranche élastique (122).

4. Le mécanisme de conformité passif (10, 10') selon l'une des revendications précédentes, dans lequel le mécanisme de conformité passif (10, 10') comprend en outre un câble (16), et le câble (16) est relié entre un moteur (15) et le bloc coulissant (132), dans lequel, lorsque le câble (16) est entraîné par le moteur (15), le bloc coulissant (132) est remorqué par le câble (16), de sorte que le bloc coulissant (132) est déplacé le long du guide linéaire (131).

5. Le mécanisme de conformité passif (10, 10') selon l'une des revendications précédentes, dans lequel l'élément de fixation (11) comprend en outre un bloc surélevé (111), et la base (12) comprend en outre une ouverture (123), dans laquelle le bloc surélevé (111) pénètre à travers l'ouverture (123), de sorte que la base (12) est installée sur l'élément de fixation (11), dans lequel le mécanisme de conformité passif (10, 10') comprend en outre un tuyau creux (19), le tuyau creux (19) traversant un centre de l'élément de fixation (11) et un centre du bloc surélevé (111).

6. Le mécanisme de conformité passif (10, 10') selon l'une des revendications précédentes, comprenant en outre un capteur (14) correspondant à la base (12), dans lequel le capteur (14) est installé sur l'élément de fixation (11) pour mesurer un angle de déplacement ou de déformation de la base (12) par rapport à l'élément de fixation (11) en réponse à une déformation élastique de la base (12).

7. Le mécanisme de conformité passif (10, 10') selon l'une des revendications précédentes, dans lequel les deux encoches (121), la tranche élastique (122) et l'ensemble de réglage de la rigidité (13) sont définis en collaboration comme étant un premier module de réglage de la rigidité, et le mécanisme de conformité passif (10, 10') comprend en outre un second module de réglage de la rigidité ayant la même structure que le premier module de réglage de la rigidité, dans lequel le premier module de réglage de la rigidité et le second module de réglage de la rigidité sont disposés sur deux côtés opposés de la fixation (11), et le premier module de réglage de la rigidité et le second module de réglage de la rigidité coopèrent l'un avec l'autre pour régler la rigidité de la base (12).

8. Le mécanisme de conformité passif (10, 10') selon l'une des revendications précédentes, dans lequel l'ensemble de réglage de la rigidité (13) comprend en outre deux structures de limitation de position (134), et les deux structures de limitation de position (134) sont disposées séparément sur l'élément de fixation (11), dans lequel l'une des deux structures de limitation de position (134) est située près du centre de l'élément de fixation (11), et l'autre des deux structures de limitation de position (134) est située près de périphérie extérieure de l'élément de fixation (11), de sorte qu'une plage mobile du bloc coulissant (132) est déterminée par les deux structures de limitation de position (134).

9. Le mécanisme de conformité passif (10, 10') selon la revendication 8, dans lequel le bloc coulissant (132) comprend en outre une structure en saillie (135), et la structure en saillie (135) fait saillie depuis une surface latérale du bloc coulissant (132) et disposés entre les deux structures de limitation de position (134), dans lequel, tandis que le bloc coulissant (132) se déplace le long du guide linéaire (131), la plage de déplacement du bloc coulissant (132) est limitée par les deux structures de limitation de position (134) à travers la structure en saillie (135), dans lequel une longueur de la plage mobile est légèrement supérieure ou égale à un déplacement des deux blocs d'arrêt (133) des deux encoches (121) à la seconde extrémité de la tranche élastique (122).

10. Un mécanisme de conformité passif (20, 20', 20"), comprenant:
un élément de fixation (21);
une base (22) installée sur l'élément de fixation (21), et comprenant une première encoche (224), une seconde encoche (221) et une tranche élastique (222),
dans lequel la tranche élastique (222) est installée sur la base (22), logée dans la première encoche (224) et faisant saillie à l'extérieur de la base (22) dans une direction allant vers la périphérie extérieur de l'élément de fixation (21), une première extrémité de la tranche élastique (222) est reliée à la base (22), et une deuxième extrémité de la tranche élastique (222) est située près de la périphérie extérieure de l'élément de fixation (21);
un premier ensemble de réglage de la rigidité (23) installé sur l'élément de fixation (21) et comprenant:
un premier guide linéaire (231) installé sur l'élément de fixation (21) et aligné avec la tranche élastique (222);
un premier un bloc coulissant (232) installé de manière mobile sur le premier guide linéaire (231) ; et
deux premiers blocs d'arrêt (233) disposés de manière fixe sur le premier bloc coulissant (232) et se déplaçant de manière synchrone avec le premier bloc coulissant (232), dans lequel les deux premiers blocs d'arrêt (233) sont en contact avec deux côtés opposés de la tranche élastique (222) pour serrer la tranche élastique (222), et une rigidité de la base (22) est réglable en fonction d'une position de serrage de la tranche élastique (222); et
un module de commutation de rigidité (24) installé sur l'élément de fixation (21) et comprenant:
un second guide linéaire (241) installé sur l'élément de fixation (21);
un second bloc coulissant (242) installé de manière mobile sur le premier guide linéaire (241) et déplacé de manière sélective vers une première position ou une seconde position; et
un second bloc d'arrêt (243) disposé de manière fixe sur le second bloc coulissant (242) et déplacé de manière synchrone avec le second bloc coulissant (242), dans lequel, lorsque le second bloc coulissant (242) est déplacé vers la première position, le second bloc d'arrêt (243) est déplacé vers la deuxième encoche (221) et est en prise avec la deuxième encoche (221), de sorte que la base (22) présente la rigidité maximale, dans lequel, lorsque le deuxième bloc coulissant (242) est déplacé vers la deuxième position, le deuxième bloc d'arrêt (243) est dégagé de la deuxième encoche (221).

11. Le mécanisme de conformité passif (20, 20', 20") selon la revendication 10, dans lequel, lorsque le deuxième bloc coulissant (242) est déplacé vers la deuxième position et la position de serrage de la tranche élastique (222) serrée par les deux premiers blocs d'arrêts (233) sont plus proches de la première extrémité de la tranche élastique (222), la raideur de la base (22) est plus élevée, dans lequel lorsque le second bloc coulissant (242) est déplacé vers la seconde position et la position de serrage de la tranche élastique (222) serrée par les deux premiers blocs d'arrêt (233) est plus proche de la deuxième extrémité de la tranche élastique (222), la raideur de la base (22) est plus faible.

12. Le mécanisme de conformité passif (20, 20', 20") selon la revendication 10 ou 11, dans lequel la tranche élastique (222) est assemblée à la base (22), dans lequel l'altitude de la tranche élastique (222') diminue progressivement de la première extrémité à la deuxième extrémité de la tranche élastique (222').

13. Le mécanisme de conformité passive (20, 20 ', 20 ") selon l'une des revendications 10 à 12, comprenant en outre un module de commande magnétique (17), dans lequel le module de commande magnétique (17) est installé sur l'élément de fixation (21) et situé près du premier bloc coulissant (232), et le module de commande magnétique (17) commande un mouvement du premier bloc coulissant (232) le long du premier guide linéaire (231) selon l'induction électromagnétique.

14. Le mécanisme de conformité passif (20, 20', 20") selon l'une des revendications 10 à 13, comprenant en outre un tuyau creux (29), dans lequel le tuyau creux (29) traverse l'élément de fixation (21) et la base (22).

15. Le mécanisme de conformité passif (20, 20', 20") selon l'une des revendications 10 à 14, dans lequel la première encoche (224), la tranche élastique (222) et le premier ensemble de réglage de la rigidité (23) sont définis de manière collaborative comme étant un premier module de réglage de la rigidité, et le mécanisme de conformité passif (20, 20', 20") comprend en outre un second module de réglage de la rigidité ayant la même structure que le premier module de réglage de la rigidité, dans lequel le premier module de réglage de la rigidité et le second module de réglage de la rigidité sont disposés proches l'un de l'autre ou situés au niveau de deux côtés opposés de l'élément de fixation (21), et le premier module de réglage de la rigidité et le second module de réglage de la rigidité coopèrent l'un avec l'autre pour régler la rigidité de la base (22).
